# EUROPÄISCHE PATENTSCHRIFT

(11) **EP 0 782 878 B1**
(45) Veröffentlichungstag und Bekanntmachung des Hinweises auf die Patenterteilung: **09.02.2000**
(21) Anmeldenummer: 96118909.9
(22) Anmeldetag: 26.11.1996
(51) Int. Cl.: B01D 21/00, B01D 21/04, B01D 29/05, B01D 29/44, B01D 29/64, B01D 29/68

(54) **Reinigungsvorrichtung**
Cleaning device
Appareil de nettoyage

(30) Priorität: 11.12.1995 DE 29519626 U
(43) Veröffentlichungstag der Anmeldung: 09.07.1997
(73) Patentinhaber: DECKEL MAHO GmbH, D-87459 Pfronten (DE)
(72) Erfinder: Schäfer, Karl-Heinz, 87629 Füssen (DE); Geissler, Alfred, 87459 Pfronten (DE)
(74) Vertreter: Beetz & Partner Patentanwälte

(56) Entgegenhaltungen:
- EP-A- 0 337 966
- WO-A-82/01664
- NL-A- 6 704 052
- US-A- 3 674 145
- US-A- 3 675 778

## Beschreibung

Die Erfindung betrifft eine Vorrichtung zur Reinigung von Kühlschmiermitteln von Werkzeugmaschinen, der im ersten Teil des Patentanspruchs 1 angegebenen Gattung.

Aus der WO-A-82/01664 ist eine derartige Reinigungsvorrichtung für Kühlschmiermittel bekannt, die in einem gemeinsamen Behälter eine durchgehende Absetzkammer und eine durch eine Trennwand von dieser abgetrennte Reinkammer aufweist. In einem horizontalen Abschnitt dieser Trennwand ist ein Spaltfilter aus parallelen Dreikantstäben angeordnet. Ein endloser Kratzerförderer erstreckt sich in der Absetzkammer bis unter den Spaltfilter. Zum Abstreifen von am Spaltsieb abgelagerten Feststoffen kann das Obertrum dieses Kratzerförderers durch einen geeigneten Mechanismus aufgehoben werden, so daß seine Kratzleisten in Kontakt mit der im wesentlichen glatten Unterfläche des Spaltsiebs gelangen und die dort vorhandenen Partikel mitnehmen. In der durchgehenden Absetzkammer bilden sich willkürliche Wirbelströme, die eine Sedimentation von feineren Partikeln behindern. Dies gilt insbesondere für den Bereich der Absetzkammer unterhalb der Reinkammer, weil in diesem relativ engen Raum intensive Wirbelungen durch die Bewegung des Kratzerförderers erzeugt werden.

Eine andere Reinigungsvorrichtung für die bei der spanabhebenden Bearbeitung zur Kühlung und Schmierung der Werkzeuge und Werkstücke bzw. zum Wegspülen der Späne verwendeten Kühlschmiermittel ist beispielsweise aus der US-A-4 751 006 bekannt. Bei dieser Reinigungsanlage ist ein Behälter durch eine vertikale Längswand in einen Auffangraum für die verschmutzte Kühlflüssigkeit und in einen Sammelraum für die gereinigte Kühlflüssigkeit unterteilt. In dem Auffangraum ist ein Kratzerförderer für den Abtransport von abgesetzten groben Partikeln zu einem gesonderten Entsorgungsbehälter angeordnet. Über ein an der oberen Deckwand des Behälters verlaufendes Rohrleitungssystem und eine Pumpe wird die aus dem Auffangraum abgesaugte Kühlflüssigkeit zu einem Heizaggregat und aus diesem zu einem oberhalb des Sammelraums angeordneten Bandfilter geführt. Die Kühlflüssigkeit wird beim Durchströmen des Bandfilters gereinigt und in dem darunter befindlichen Sammelraum aufgefangen. Der Bandfilter besteht aus einem motorisch angetriebenen Endlosband, auf dessen Obertrum ein von einer Vorratsrolle abgezogener Papierfilter aufliegt. Durch den Antrieb des Endlosbandes wird der Papierfilter mitgenommen und zusammen mit den darauf abgelagerten Feststoffpartikeln in einem endseitigen Container gesammelt, wobei gleichzeitig neues Filterpapier von der Vorratsrolle nachgezogen wird. Ein Problem derartiger Reinigungsanlagen besteht in dem relativ hohen Verbrauch an Filterpapier, dem hohen Aufwand für die thermische Behandlung und das Überführen der Flüssigkeit sowie in der erhöhten Umweltbelastung, da die verunreinigten Papierfilter als Sondermüll entsorgt werden müssen.

Der Erfindung liegt die Aufgabe zugrunde, eine umweltfreundliche und wartungsarme Reinigungsvorrichtung für Kühlschmiermittel zu schaffen, die bei kompakter Bauweise einen hohen Reinigungsgrad ermöglicht.

Diese Aufgabe wird erfindungsgemäß durch die im Patentanspruch 1 angegebenen Merkmale gelöst.

Ein wesentlicher Vorteil der erfindungsgemäßen Reinigungsvorrichtung liegt in der guten Reinigungswirkung trotz Verzicht auf zusätzliche Papierfilter oder Filtervliese. Dadurch können erhebliche Kosten für die Beschaffung, Auswechslung und Entsorgung von Filtermaterialien eingespart werden. Darüber hinaus wird auch der Wartungsaufwand verringert.

Ein weiterer Vorteil ist auch der durch den Niveauausgleich zwischen den Behälterbereichen erfolgende selbsttätige Flüssigkeitsumlauf. Dadurch sind zwischen den einzelnen Bereichen keine zusätzlichen Rohrleitungen mit zwischengeschalteten Pumpen für die Überführung der Kühlflüssigkeit erforderlich. Der Spaltfilter wird mit geringer Strömungsgeschwindigkeit auf einer größeren Fläche horizontal durchströmt und ermöglicht eine besonders betriebssichere und wirkungsvolle Filtration.

Eine einfach aufgebaute Reinigungseinrichtung besteht aus einem manuell betätigbaren Abstreifmechanismus, der einen durch eine Hebelanordnung parallel zum Spaltfilter verfahrbaren Schlitten umfaßt, an dem zwei an den Dreikantstäben anliegende Abstreifer befestigt sind. Durch diese Anordnung kann der Spaltfilter bei Bedarf auf der gesamten Fläche von Anlagerungen befreit werden.

Die Reinigungseinrichtung kann anstelle des Abstreifmechanismus oder zusätzlich zu diesem einen auf der Seite der Reinkammer angeordneten Rückspülmechanismus aufweisen, durch den die Spalte beispielsweise von einem über Düsen zugeführten Medium freigespült werden.

Die Dreikantdrähte des spaltsiebes sind derart angeordnet, daß sich die zwischen ihnen gebildeten Spalte von dem Vorreinigungsbereich zur Reinkammer hin konisch erweitern. Dadurch ergeben sich gute Strömungsbedingungen und der Spaltfilter weist auf seiner dem Vorreinigungsbereich zugewandten Seite eine glatte Fläche auf, von der eventuell anhaftende Verunreinigungen leicht entfernt werden können. Darüber hinaus werden Verklemmungen der Partikel innerhalb der Spalte vermieden.

Eine einfache Herstellung des Spaltfilters kann dadurch erreicht werden, daß die Dreikantdrähte über mit diesen verschweißte Querstäbe miteinander verbunden sind.

In einer besonders vorteilhaften Ausführung ist der Spaltfilter als eigenständige Baueinheit ausgebildet, die in einer entsprechenden Ausnehmung in der Trennwand montiert ist. Auf diese Weise kann der Spaltfilter einfach ausgetauscht werden.

Die Fördereinrichtung für den Abtransport abgesetzter Partikel besteht aus einem Kratzerförderer, der am Boden des Vorreinigungsbereichs entlang und durch den Einlaufbereich hindurch zu einem extern angeordneten Entsorgungsbehälter verläuft. Auf diese Weise können sowohl die im Vorreinigungsbereich abgesetzten Partikel, als auch die bereits im Einlaufbereich absinkenden Feststoffe gemeinsam entfernt werden.

Zur beruhigten Einströmung umfaßt der Zulauf einen oberhalb des Einlaufbereichs angeordneten Zulaufverteiler, über den das verschmutzte Kühlschmiermittel eingeleitet wird.

Die Entnahme der gereinigten Kühlflüssigkeit erfolgt zweckmäßigerweise über Pumpen, von denen zumindest eine in der Reinkammer angeordnet ist. Für bestimmte Zwecke reicht jedoch bereits die in der Vorreinigungskammer erzielte Reinigungswirkung aus, so daß in diesem Fall auch in der Vorreinigungskammer eine Pumpe vorgesehen ist. So kann beispielsweise die aus der Vorreinigungskammer entnommene Kühlflüssigkeit für die externe Kühlschmiermittelzufuhr verwendet werden, während die besonders gereinigte Kühlflüssigkeit aus der Reinkammer für die Kühlmittelversorgung von Werkzeugen mit innerer Kühlmittelzufuhr genutzt wird.

Weitere Besonderheiten und Vorzüge der Erfindung ergeben sich aus der folgenden Beschreibung eines bevorzugten Ausführungsbeispiels anhand der Zeichnung. Es zeigen:
- Fig. 1: einen Kühlschmiermittel-Kreislauf einer Werkzeugmaschine mit Reinigungsvorrichtung;
- Fig. 2: einen perspektivisch dargestellten Behälter einer Reinigungsvorrichtung;
- Fig. 3: eine Reinigungsvorrichtung in Draufsicht;
- Fig. 4: einen Schnitt IV-IV in Fig. 3;
- Fig. 5: den schematischen Aufbau eines Spaltfilters;
- Fig. 6: eine Einzelheit VI in Fig. 7;
- Fig. 7: eine Reinigungseinrichtung für den Spaltfilter in Seitenansicht; und
- Fig. 8: eine Reinigungseinrichtung für den Spaltfilter in Draufsicht.

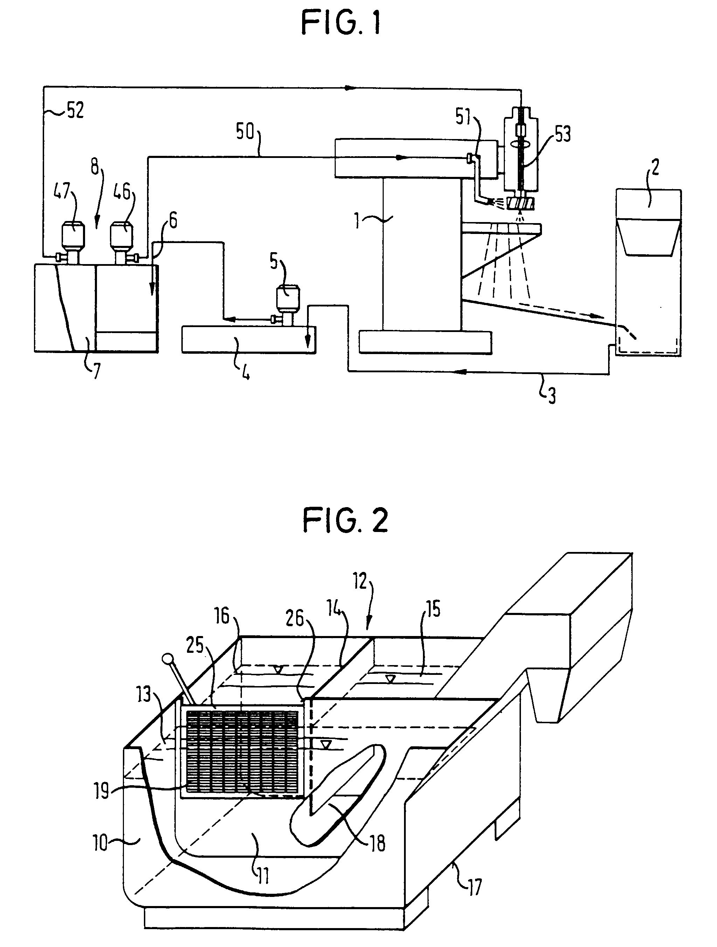

Bei dem in Fig. 1 dargestellten Kühlschmiermittel-Kreislauf einer Werkzeugmaschine 1 wird das bei der Bearbeitung verschmutzte Kühlschmiermittel zusammen mit den Bearbeitungsspänen zu einem Späneförderer 2 geführt, in dem die groben Späne von dem Kühlschmiermittel getrennt und zu einem nicht dargestellten Spänecontainer transportiert werden.

Die am Boden des Späneförderers 2 aufgefangene Kühlflüssigkeit wird über eine Leitung 3 in einen Sammelbehälter 4 eingeleitet, von dem sie über eine Hebepumpe 5 einem Zulauf 6 einer Reinigungsvorrichtung 7 zugeführt wird. In der Reinigungsvorrichtung 7 wird das Kühlschmiermittel auch von kleineren Partikeln und anderen Verschmutzungen befreit und über eine Entnahmeeinrichtung 8 mit Pumpen 46 und 47 wieder an die Werkzeugmaschine 1 gereinigt zurückgeführt.

Die in den Fig. 2 bis 4 schematisch dargestellte Reinigungsvorrichtung 7 umfaßt einen in Fig. 2 perspektivisch dargestellten Behälter 10, der durch eine vertikale längsverlaufende Trennwand 11 in eine große Absetzkammer 12 und eine kleine seitliche Reinkammer 13 unterteilt ist. Durch eine senkrecht zur Trennwand 11 angeordnete vertikale Zwischenwand 14 wird die Absetzkammer 12 in einen Einlaufbereich 15 und einen Vorreinigungsbereich 16 unterteilt. Die Zwischenwand 14 reicht bis zu einem vorbestimmten Abstand vom Behälterboden 17 und begrenzt eine Durchströmöffnung 18 zwischen dem Einlaufbereich 15 und dem Vorreinigungsbereich 16. In der Trennwand 11 ist zwischen dem Vorreinigungsbereich 16 und der Reinkammer 13 ein Spaltfilter 19 angeordnet.

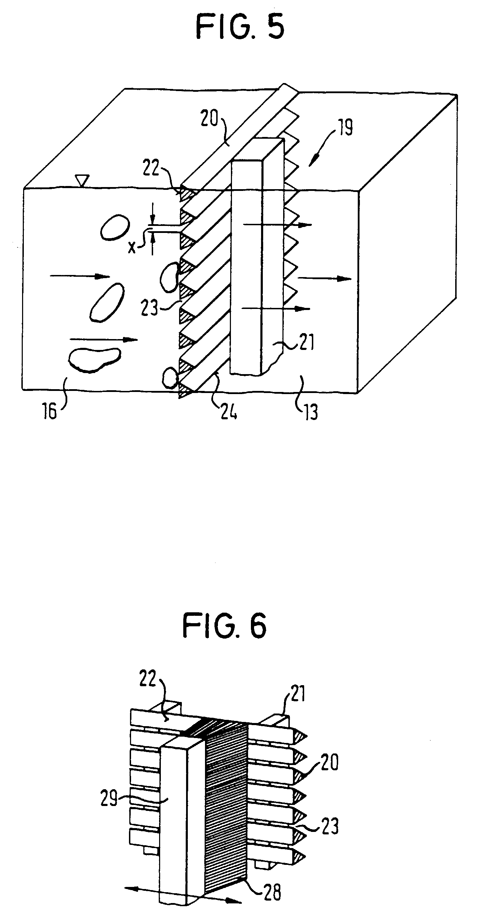

Wie insbesondere aus den Fig. 5 und 6 hervorgeht, besteht der Spaltfilter 19 aus mehreren mit einer vorgegebenen Distanz voneinander beabstandeten parallelen Dreikantdrähten 20, die an der zur Reinkammer 13 weisenden Seite über Querstäbe 21 miteinander verbunden sind. Die Dreikantdrähte 20 sind derart angeordnet, daß sie mit einer ihrer Seitenflächen 22 eine zum Vorreinigungsbereich 16 gewandte vertikale Ebene bilden. Dadurch entsteht zwischen zwei aufeinanderfolgenden Dreikantdrähten 20 jeweils ein Durchgangsspalt 23, der an der Seite des Vorreinigungsbereichs 16 seinen engsten Querschnitt aufweist und sich zur Reinkammer 13 hin konisch erweitert. An der engsten Stelle beträgt der Abstand x zwischen zwei Dreikantdrähten 20 bei dem dargestellten Ausführungsbeispiel etwa 50 µm. Je nach gewünschtem Reinigungsgrad in der Reinigungskammer 13 kann der Abstand jedoch verändert werden. Über die Durchgangsspalte 23 fließt die Kühlflüssigkeit von dem Vorreinigungsbereich 16 in den Reinbereich 13, während diejenigen Partikel, die größer als der Abstand x sind, im Vorreinigungsbereich 16 praktisch ohne Verklemmung zurückgehalten werden. Die Querstäbe 21 weisen entsprechende Ausnehmungen für die Kanten 24 der Dreikantdrähte 20 auf und sind mit diesen verschweißt. Die über die Querstäbe 21 miteinander verbundenen Dreikantdrähte 20 sind gemäß Fig. 2 in einem Rahmen 25 angeordnet und bilden ein Spaltsieb, das in eine entsprechende Ausnehmung 26 in der Trennwand 11 einsetzbar ist.

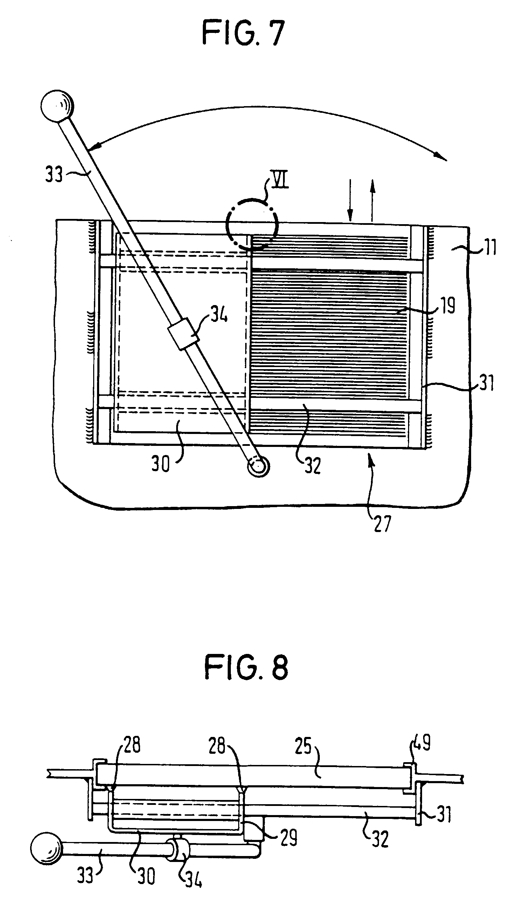

An der zum Vorreinigungsbereich weisenden Seite des Spaltfilters 19 ist eine in den Fig. 7 und 8 gesondert dargestellte Reinigungseinrichtung 27 zur Entfernung eventuell anhaftender Verunreinigungen angeordnet. Die Reinigungseinrichtung 27 besteht aus zwei senkrecht zu den Dreikantdrähten 20 verlaufenden und auf deren vertikalen Seitenflächen 22 aufliegenden Abstreifern 28, die an zwei Querträgern 29 eines in Längsrichtung der Dreikantdrähte 20 verfahrbaren Schlittens 30 gehalten sind. Der Schlitten 30 ist auf zwei über Stege 31 an der Trennwand 11 angeschweißten Schienen 32 geführt. Zur Verschiebung der Abstreifer 28 am Spaltfilter 19 ist ein Betätigungshebel 33 unterhalb des Spaltfilters 19 an der Trennwand 11 angelenkt, auf dem eine mit dem Schlitten 30 verbundene Führungshülse 34 verschiebbar geführt ist. Durch Verschwenken des Betätigungshebels 33 kann der Schlitten 30 parallel zu dem Spaltfilter 19 hin- und herbewegt werden, wobei die am Schlitten angeordneten Abstreifer 28 über die vertikalen Seitenflächen 22 der Dreikantdrähte 20 gleiten und Verschmutzungen abstreifen. Der Spaltfilter 19 ist mit seinem Rahmen 25 in U-förmigen Schienen 49 am Rand einer Ausnehmung in der Trennwand 11 gehalten und kann zum Austausch oder zur Generalreinigung nach oben herausgezogen bzw. wiedereingesetzt werden, wie dies durch die Pfeile in Fig. 7 angedeutet ist.

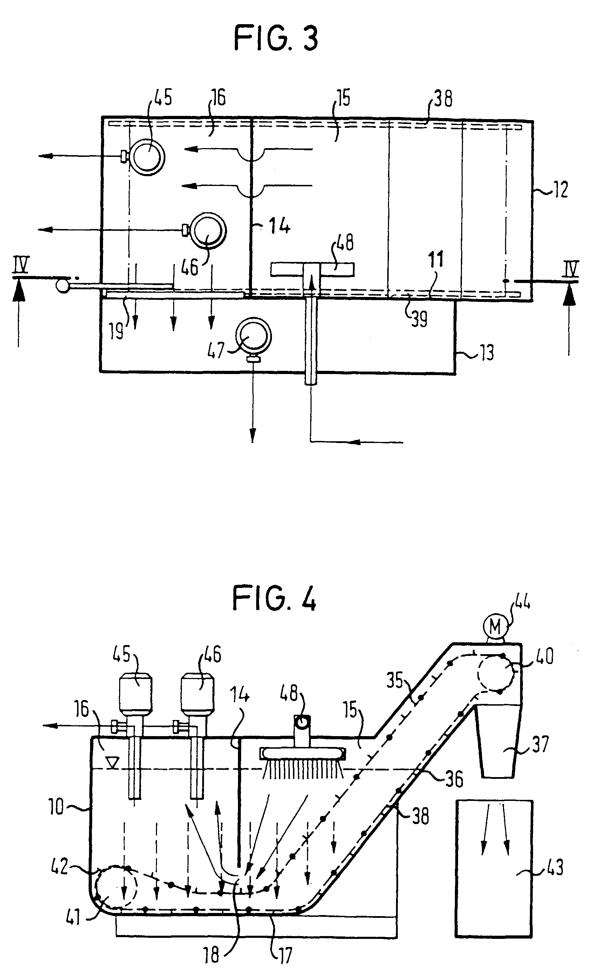

Wie insbesondere aus Fig. 4 ersichtlich, ist in der Absetzkammer 12 für den Abtransport der Sedimente aus dem Einlauf- und Vorreinigungsbereich ein Kratzerförderer 35 angeordnet, der innerhalb des Vorreinigungsbereichs 16 sowie durch die Durchströmöffnung 18 hindurch am Behälterboden 17 und durch den Einlaufbereich 15 hindurch entlang einer schräg nach oben führenden Austragsschräge 36 zu einem Auswurfschacht 37 verläuft. Der Kratzerförderer 35 besteht aus zwei parallel zueinander angeordneten und synchron angetriebenen Endlosketten 38, 39, die um eine motorisch betriebene Antriebsrolle 40 am Auswurfschacht 37 sowie eine in der Nähe des Behälterbodens 17 im Vorreinigungsbereich 16 angeordnete Umlenkung 41 geführt sind. Zwischen den Endlosketten 38, 39 sind in gleichmäßigen Abständen querverlaufende Kratzerwinkel 42 montiert. Die Endlosketten 38, 39 sind derart angeordnet, daß die Kratzerwinkel 42 des Untertrums beim Antrieb der Ketten dicht über den Behälterboden 17 und die Austragsschräge 36 gleiten und dabei die Sedimente zum Auswurfschacht 37 transportieren, von dem sie in einen separaten Entsorgungsbehälter 43 fallen. Der Kratzerförderer 35 wird durch einen Motor 44 getaktet angetrieben, so daß das nasse Sediment im oberen Bereich der Austragsschräge 36 abtrocknen kann, wodurch der Kühlschmiermittelverlust erheblich reduziert wird. Im Bereich der Austragsschräge 36 legt sich auch ein Teil der Schwimmspäne sowie Öl an, die von den Kratzerwinkeln 42 ebenfalls mitgenommen werden.

Oberhalb des Vorreinigungsbereichs 16 sind zwei Saugpumpen 45 und 46 für die Entnahme des dort gesammelten und bereits vorgereinigten Kühlschmiermittels angeordnet. Auch an der Reinkammer 13 ist eine Förderpumpe 47 zur Absaugung der dort aufgefangenen, besonders gereinigten Kühlflüssigkeit installiert.

Das in den Zeichnungen dargestellte Ausführungsbeispiel der erfindungsgemäßen Reinigungsvorrichtung funktioniert wie folgt:

Das verschmutzte Kühlschmiermittel wird mittels der externen Hebepumpe 5 über einen oberhalb des Einlaufbereichs 15 angeordneten Zulaufverteiler 48 in den Behälter 10 eingeleitet. Der Zulaufverteiler 48 ist als horizontal verlaufendes Querrohr mit seitlichen Schlitzen ausgebildet, das am Ende einer Zulaufleitung angeordnet ist. Zur beruhigten Einströmung ist der Zulaufverteiler 48 vorzugsweise zwischen 10 und 200 mm von der Oberfläche des Kühlschmiermittels beabstandet. In dem Einlaufbereich 15 sinken bereits schwere Partikel zu Boden und werden von dem Kratzerförderer 35 mitgenommen, so daß bereits in diesem Bereich eine Grobreinigung stattfindet. Die im Einlaufbereich 15 an der Oberfläche schwimmenden Öle und leichten Partikel werden von der Zwischenwand 14 an einem Übertritt in den Vorreinigungsbereich 16 gehindert. Über die Durchströmöffnung 18 im unteren Bereich der Zwischenwand 14 strömt die Kühlflüssigkeit in den Vorreinigungsbereich 16, in dem sich die Kühlflüssigkeit beruhigt, so daß auch kleinere Partikel zu Boden sedimentieren können. Die im Vorreinigungsbereich 16 zu Boden sinkenden Partikel werden ebenfalls durch den Kratzerförderer 35 mitgenommen und zu dem Auswurfschacht 37 transportiert, von dem die Sedimente in den separaten Entsorgungsbehälter 43 fallen. Von dem Vorreinigungsbereich 16 aus strömt das Kühlschmiermittel über den Spaltfilter 19 in die Reinkammer 13, wobei an dem Spaltfilter 19 auch noch feinere Partikel ausgefiltert werden. Die durch den Spaltfilter 19 zurückgehaltenen Partikel können auf der Vorreinigungsseite zu Boden sinken und werden dort ebenfalls durch den Kratzerförderer 35 ausgetragen. Durch die an dem Spaltfilter 19 vorgesehene Reinigungseinrichtung 27 können an dem Spaltfilter anhaftende Partikel gelöst werden, die dann ebenfalls zu Boden sinken und vom Kratzerförderer 35 abtransportiert werden. Der Durchfluß der Kühlflüssigkeit erfolgt vom Einlaufbereich 15 über den Vorreinigungsbereich 16 in die Reinkammer 13. Die Strömung durch die einzelnen Bereiche wird durch das Niveauausgleichsbestreben von Flüssigkeiten bzw. durch die Saugwirkung der Pumpen erzeugt.

In dem Vorreinigungsbereich 16 wird bereits ein für die externe Kühlung oder Spänespülung ausreichender Reinheitsgrad erzielt. Über die beiden Saugpumpen 45 und 46 wird die Kühlflüssigkeit aus dem Vorreinigungsbereich 16 abgesaugt und beispielsweise über eine Leitung 50 zu in Fig. 1 dargestellten Spritzdüsen 51 geführt. Die in der Reinkammer 13 gesammelte Kühlflüssigkeit mit hohem Reinigungsgrad wird über die Förderpumpe 47 und eine Zufuhrleitung 52 zu einer internen Kühlschmiermittelzufuhr 53 durch die Bearbeitungsspindel und das Werkzeug geleitet.

Die Erfindung ist nicht auf das dargestellte und vorstehend beschriebene Ausführungsbeispiel beschränkt. So kann z.B. statt dem manuell betätigten Abstreifmechanismus oder zusätzlich zu diesem eine Spülvorrichtung zum Ausspülen der zwischen den Dreikantdrähten gebildeten Spalte vorgesehen sein. Anstelle der manuellen Betätigung kann auch eine automatische Betätigung erfolgen, die z.B. durch Druckdifferenzen oder Niveauunterschiede zwischen den einzelnen Bereichen aktiviert wird. Die erfindungsgemäße Vorrichtung kann nicht nur zur Reinigung von Kühlschmiermitteln von Werkzeugmaschinen, sondern auch zur Aufbereitung von anderen durch Feststoffe verunreinigten Flüssigkeiten und Emulsionen eingesetzt werden, beispielsweise in Waschanlagen für Kraftfahrzeuge. Es können auch zusätzliche Ölabscheider vorgesehen werden, durch welche das überschüssige Öl aus dem Behälter entfernt wird. Der als Querrohr mit seitlichen Schlitzen ausgebildete Zulaufverteiler kann auch in Form eines Kegelmantels aufgebaut sein, an dem die verschmutzte Kühlflüssigkeit entlangläuft.

## Patentansprüche

1. Vorrichtung zur Reinigung von Kühlschmiermitteln von Werkzeugmaschinen, bestehend aus
- einem durch eine Trennwand (11) in eine Absetzkammer (12) und eine Reinkammer (13) unterteilten Behälter (10) mit einem Zulauf (6) für das verschmutzte Kühlschmiermittel und eine Entnahmeeinrichtung (8) für das gereinigte Kühlschmiermittel,
- einem zwischen der Absetzkammer (12) und der Reinkammer (13) angeordneten Spaltfilter (19) mit einem Abstreifmechanismus (28, 29) und
- einem in der Absetzkammer (12) angeordneten Endlosförderer (35) zum Abtransport abgesetzter Partikel aus dem Behälter (10),
dadurch **gekennzeichnet,**
daß die Absetzkammer (12) durch eine vertikale Zwischenwand (14) in einen Einlaufbereich (15) und einen Vorreinigungsbereich (16) unterteilt ist, die über eine Durchströmöffnung (18) im unteren Bereich der Zwischenwand (14) miteinander verbunden sind, und
daß der Spaltfilter (19) in der vertikalen Trennwand (11) zwischen dem Vorreinigungsbereich (16) und der Reinkammer (13) angeordnet ist.

2. Vorrichtung nach Anspruch 1, dadurch gekennzeichnet, daß der Abstreifmechanismus (28, 29, 30) einen durch eine Hebelanordnung (33) parallel zum Spaltfilter (19) verfahrbaren Schlitten (30) umfaßt, an dem mindestens ein an den Dreikantstäben (20) anliegender Abstreifer (28) befestigt ist.

3. Vorrichtung nach Anspruch 2, dadurch gekennzeichnet, daß der Abstreifer (28) eine auswechselbare Bürste oder Reinigungsleiste ist.

4. Vorrichtung nach Anspruch 2 oder 3, dadurch gekennzeichnet, daß die Hebelanordnung aus einem an der Zwischenwand (14) angelenkten Betätigungshebel (33) besteht, auf dem eine mit dem Schlitten (30) verbundene Führungshülse (34) verschiebbar geführt ist.

5. Vorrichtung nach einem der Ansprüche 2 bis 4, dadurch gekennzeichnet, daß der Schlitten (30) auf parallel zum Spaltfilter (19) verlaufenden Führungsschienen (32) verschiebbar gelagert ist.

6. Vorrichtung nach einem der Ansprüche 1 bis 5, dadurch gekennzeichnet, daß der Spaltfilter (19) auswechselbar ist.

7. Vorrichtung nach einem der Ansprüche 1 bis 6, dadurch gekennzeichnet, daß der Zulauf (6) einen oberhalb des Einlaufbereichs (15) angeordneten Zulaufverteiler (48) umfaßt.

8. Vorrichtung nach einem der Ansprüche 1 bis 7, dadurch gekennzeichnet, daß die Entnahmeeinrichtung (8) mindestens eine Saugpumpe (45, 46) für die Entnahme des Kühlschmiermittels aus dem Vorreinigungsbereich (16) aufweist.

9. Vorrichtung nach einem der Ansprüche 1 bis 8, dadurch gekennzeichnet, daß die Reinkammer (13) seitlich neben der Absetzkammer (12) angeordnet ist und die Trennwand (11) eine Längswand der Absetzkammer (12) bildet.

## Claims

1. Apparatus for cleaning cooling lubricants of machine tools, comprising
- a tank (10) subdivided by a partition wall (11) into a settling chamber (12) and a clean chamber (13) and having an inlet (6) for the contaminated cooling lubricant and a withdrawal device (8) for the cleaned cooling lubricant,
- a slotted filter (19) arranged between the settling chamber (12) and the clean chamber (13) and having a wiping mechanism (28, 29), and
- an endless conveyor (35) arranged in the settling chamber (12) and serving for the removal of deposited particles from the tank (10),
characterized
in that the settling chamber (12) is subdivided by a vertical intermediate wall (14) into an entry area (15) and a preliminary-cleaning area (16), which areas are connected to each other via a through-opening (18) in the lower region of the intermediate wall (14), and
in that the slotted filter (19) is arranged in the vertical partition wall (11) between the preliminary-cleaning area (16) and the clean chamber (13).

2. Apparatus according to Claim 1, characterized in that the wiping mechanism (28, 29, 30) comprises a slide (30) which can be moved parallel to the slotted filter (19) by a lever arrangement (33) and to which is fastened at least one wiper (28) bearing against the triangular bars (20).

3. Apparatus according to Claim 2, characterized in that the wiper (28) is a replaceable brush or cleaning strip.

4. Apparatus according to Claim 2 or 3, characterized in that the lever arrangement comprises an actuating lever (33) which is hinged to the intermediate wall (14) and on which is displaceably guided a guide sleeve (34) connected to the slide (30).

5. Apparatus according to one of Claims 2 to 4, characterized in that the slide (30) is displaceably mounted on guide rails (32) running parallel to the slotted filter (19).

6. Apparatus according to one of Claims 1 to 5, characterized in that the slotted filter (19) is replaceable.

7. Apparatus according to one of Claims 1 to 6, characterized in that the inlet (6) comprises an inlet distributor (48) arranged above the entry area (15).

8. Apparatus according to one of Claims 1 to 7, characterized in that the withdrawal device (8) has at least one suction pump (45, 46) for the withdrawal of the cooling lubricant from the preliminary-cleaning area (16).

9. Apparatus according to one of Claims 1 to 8, characterized in that the clean chamber (13) is arranged laterally next tc the settling chamber (12), and the partition wall (11) forms a longitudinal wall of the settling chamber (12).

## Revendications

1. Dispositif pour la purification de réfrigérants-lubrifiants pour machines-outils, comprenant :
- un récipient (10) subdivisé par une cloison de séparation (11) en une chambre de décantation (12) et une chambre pour produit purifié (13), avec une entrée (6) pour le réfrigérant-lubrifiant pollué et un système d'extraction (8) du réfrigérant-lubrifiant purifié,
- un filtre à fentes (19) disposé entre la chambre de décantation (12) et la chambre pour produit purifié (13), muni d'un mécanisme de raclage (28, 29), et
- un transporteur sans fin (35) disposé dans la chambre de décantation (12) pour l'évacuation hors du récipient (10) de particules sédimentées,
caractérisé en ce que,
la chambre de décantation (12) est subdivisée par une cloison intermédiaire (14) en une zone d'entrée (15) et une zone de pré-purification (16), qui sont reliées l'une à l'autre par une ouverture de passage (18) dans la zone basse de la cloison intermédiaire (14); et
le filtre à fentes (19) est disposé dans la cloison de séparation verticale (11) entre la zone de pré-purification (16) et la chambre pour produit purifié (13).

2. Dispositif selon la revendication 1, caractérisé en ce que le mécanisme de raclage (28, 29, 30) comporte un chariot (30) pouvant être déplacé par un système à levier (33) parallèlement au filtre à fentes (19), auquel au moins un racleur (28) adjacent aux fils triangulaires (20) est fixé.

3. Dispositif selon la revendication 2, caractérisé en ce que le racleur (28) est une brosse ou une barrette de nettoyage remplaçable.

4. Dispositif selon la revendication 2 ou 3, caractérisé en ce que le système à levier consiste en un levier d'actionnement (33) articulé à la cloison intermédiaire (14), sur lequel une douille de guidage (34) connectée au chariot (30) peut coulisser.

5. Dispositif selon l'une quelconque des revendications 2 à 4, caractérisé en ce que le chariot (30) est monté mobile sur des rails de guidage (32) s'étendant parallèlement au filtre à fentes (19).

6. Dispositif selon l'une quelconque des revendications 1 à 5, caractérisé en ce que le filtre à fentes (19) est remplaçable.

7. Dispositif selon l'une quelconque des revendications 1 à 6, caractérisé en ce que l'admission (6) comporte un répartiteur d'entrée (48) disposé au-dessus de la zone d'entrée (15).

8. Dispositif selon l'une quelconque des revendications 1 à 7, caractérisé en ce que le système d'extraction (8) présente au moins une pompe aspirante (45, 46) pour l'extraction du réfrigérant-lubrifiant hors de la zone de pré-purification (16).

9. Dispositif selon l'une quelconque des revendications 1 à 8, caractérisé en ce que la chambre pour produit purifié (13) est disposée latéralement à côté de la chambre de décantation (12) et la cloison de séparation (11) forme une paroi longitudinale de la chambre de décantation (12).
